(19) Europäisches Patentamt

European Patent Office

Office européen des brevets

(11) **EP 1 231 790 A2**

(12) **EUROPEAN PATENT APPLICATION**

(43) Date of publication:
14.08.2002 Bulletin 2002/33

(51) Int Cl.⁷: **H04N 7/173**

(21) Application number: 02003030.0

(22) Date of filing: 12.02.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 13.02.2001 US 268084 P

(71) Applicant: **Hoshen-Eliav Systems Engineering Ltd.**
**69510 Tel Aviv (IL)**

(72) Inventors:
• **Hoshen, Gideon**
**47210 - Ramat-Hasharon (IL)**
• **Eliav, Joseph**
**63576 - Tel Aviv (IL)**
• **Lozovsky, Ilan**
**46500 - Herzliya (IL)**

(74) Representative: **Gervasi, Gemma, Dr.**
**Notarbartolo & Gervasi S.p.A.,**
**Corso di Porta Vittoria, 9**
**20122 Milano (IT)**

Remarks:
A request for correction has been filed pursuant to Rule 88 EPC (Renumbering the claims 22 to 32; new claim 22 shall start from present claim 21 after "QAM techniques." A decision on the request will be taken during the proceedings before the Examining Division (Guidelines for Examination in the EPO, A-V, 3.).

(54) **System for distributing video and content on demand**

(57) A method for distributing content on demand over a cable network in which the subscribers are connected to a Central Unit in a hierarchical order of nodes, each node comprises a plurality of subscribers clusters. A Management System is provided at the Central Unit. Some of the subscribers within each cluster are provided with an STB, and the rest of the subscribers within each cluster are provided with an SSTB. Titles are transmitted from the Central Unit to the SSTBs, and stored within the SSTBs. A viewable list of the titles stored in all the SSTBs that are connected within the cluster of that subscriber is provided to each STB subscriber or SSTB subscriber. Whenever a subscriber, selects a title for viewing from the viewable list, the selected title is transmitted to the STB or the SSTB of that subscriber from at least one of the SSTBs within the cluster of that subscriber which contain the title or a portion thereof.

FIG. 2

**EP 1 231 790 A2**

## Description

### Field of the Invention

The present invention relates to the field of cable T.V. networks. More particularly, the invention relates to a video and content on demand system for cable T. V. networks.

### Background of the Invention

Cable TV operators are in early stages of offering Video-On-Demand (VOD) and Content-On-Demand (COD) services to their users. These services are being offered as part of the transition to digital Set-Top Boxes (STB) that allow selection of the required content in real time via the STB, billing and addressing the selected content to the specific user. For Satellite operators, real video on demand service is not feasible, and other solutions such as Tivo or ReplayTV (US 6,324,338) seem to fulfill part of the user quest. These solutions are based on Digital Video Recording (DVR) technology, in which the user records a number of channels or programs, some of which can be viewed later that day.

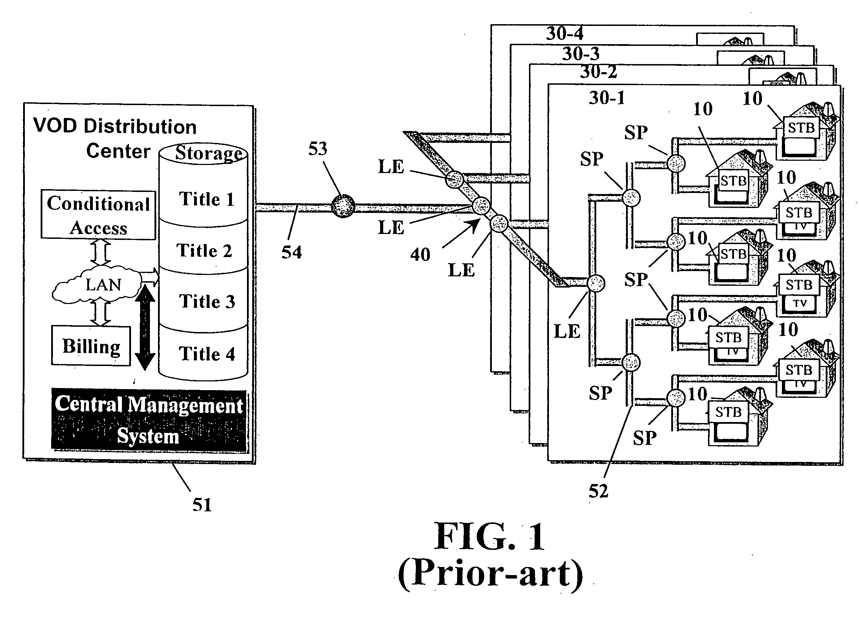

The current solutions for supplying Video on Demand (VOD) and Content on Demand (COD) in a cable T.V. network are centralized (e.g., Concurrent Systems Inc, Diva Systems). When the term VOD is used hereinafter, if not otherwise specifically stated, it should be noted that it relates to COD as well. These types of the central solutions as illustrated in Fig. 1 are expensive and bandwidth demanding to the extent that they require expansion of the Fiber-Optic (FO) parts of the network and reducing the number of subscribers per node 40, or limiting the service to a small number of concurrent viewers. In a centralized solution for VOD services, the cable set-top boxes 10 feature an interactive program guide which enables selection of a desired title (usually the selection is limited to 50-100 titles). The subscriber's selection is transferred to centralized servers and disk farms that send the desired video to the specific set-top box 10. Each concurrent viewer at the end of the Fiber Optic and Coax chain 54 requires a dedicated video channel. The bandwidth is an expensive resource, used for analog and digital broadcast and Internet services. Since most of the bandwidth is dedicated to broadcast TV and Internet, it is not reasonable to dedicate more than 100 MHz to VOD services. The centralized solution reaches this upper limit when about 10% to 15% of the subscribers in a typical node are using the service simultaneously. In order to avoid this limitation, some Cable TV operators plan to install full Fiber Optic networks, including the last mile up to the users homes, which is very expensive.

Enron Inc. has performed a VOD distribution experiment using Cisco's Content Management system ("*http://www.enron.com*"). In this solution, a plurality of communication servers are used to reduce the bandwidth required for the fiber optic links, and sometimes even of the Coax links, by locating the communication servers one hop away from the subscriber. However, this solution can not be implemented without modifying the network infrastructure and it requires the use of non-standard STB's and transmission methods (IP streaming).

All the methods described above have not yet provided satisfactory solutions to the problems that COD and VOD applications face over existing infrastructures of Cable networks.

It is an object of the present invention to provide a system and method for providing VOD services to most (or all) of the subscribers over existing cable networks infrastructures, with no modifications or a minimum of modifications to the network.

It is another object of the present invention to provide a system and method for VOD services which are economical in terms of Bandwidth, communication facilities, and subscribing costs.

It is a further object of the present invention to provide a system and method for failure proof VOD services by utilizing hot backup methods.

It is a still another object of the present invention to provide a system and method for VOD services comprising Digital Video Recording (DVR) Capabilities, enabling subscribers to record designated broadcast channels for later viewing.

It is a still further object of the present invention to provide a system and method enabling title storage in and communication between, dedicated STBs that share the same cluster, or located in neighboring clusters, over cable networks.

Other objects and advantages of the invention will become apparent as the description proceeds.

### Summary of the Invention

The present invention is directed to a method for distributing content on demand over a cable network in which the subscribers are connected to a Central Unit in a hierarchical order of nodes, each node comprises a plurality of subscribers clusters. The Central Unit includes a Management System. Some of the subscribers within each cluster are provided with an STB, and the rest of the subscribers within each cluster are provided with an SSTB. The method comprises transmitting from the Central Unit titles to the SSTBs, and storing the titles within the SSTBs. Each STB subscriber or SSTB subscriber is provided with a viewable list of the titles stored in all the SSTBs that are connected within the cluster of that subscriber. Whenever a subscriber selects a title for viewing from the viewable list, the selected title is transmitted to the STB or the SSTB of that subscriber from at least one of the SSTBs within the cluster of that subscriber which contain the title or a portion thereof.

According to one embodiment of the invention the title is a video or an audio title, and the distribution method is a method for distributing Video On Demand. In another embodiment of the invention, the titles are transmitted from the Central Unit to the SSTBs, during low traffic hours.

In yet another embodiment of the invention different portions of each title are being stored within different SSTBs within a same cluster. A copy of each title may be stored in at least one backup SSTB within a same cluster.

In a preferred embodiment of the invention the backup SSTB supervises the proper transmission during the transmission of a specific title, and when a failure in transmission of the title is detected, the backup SSTB continues the transmission of the rest of the title to the subscriber from the backup SSTB. The titles can be divided to portions that are stored in at least two SSTBs within a same cluster, for preventing the possibility of a copyright breach by copying a full stored title from the SSTB.

The title portions can be transmitted in sequence to the STB or the SSTB of the ordering subscriber alternatively from the plurality of the SSTBs in which portions of the title are stored, while at any time at least one backup SSTB supervises the proper transmission.

The Management System can collects data regarding the orders and accordingly carry out the billings. Optionally, the transmission of the content from the Central Unit to the SSTBs and/or the transmission of the ordered content from SSTBs to a subscriber STB or SSTB is encrypted, and decrypted at the receiving end.

According to another preferred embodiment of the invention each SSTB is capable of carrying out Internet Sessions through the Management System over the existing Internet infrastructures, and thereby to provide Internet services to subscribers within the cluster, by displaying said session as a video stream via their STB/SSTBs.

Optionally, the number of subscribers within a cluster may be in the range of several tens of subscribers, and the transmission of an ordered title is kept within a cluster by means of a Line Extender blocking leakage of the transmission out of the cluster.

Alternatively, the cluster may be extended by modifying the blocking Line Extender in such a manner to allow transmission of the Content On Demand within a close medium containing at least two clusters, the leakage of transmission out of the medium being blocked by another Line Extender.

In yet another preferred embodiment, the Management System controls the operations of the system and manages the backups, when needed.

The method may further comprise recording and storing selected programs in at least two SSTBs, and transmitting the stored program to the users, whenever a user request is obtained. The SSTBs are preferably capable of concurrently transmitting a plurality of selected titles to a requesting STB/SSTB(s).

Optionally, transmissions originated from two or more SSTBs are multiplexed to a single channel by assigning to each SSTB specific frame positions within the channel. Alternatively, at least one SSTB in a cluster is used as a relay station for receiving transmissions from other SSTBs in the cluster, and multiplexing the transmissions on one or more channels. The title transmission from the SSTBs is preferably performed by utilizing QAM techniques.

The present invention is also directed to a system for providing Content On Demand over a cable network. The system includes: conventional STBs at homes of some of the subscribers' houses within each cluster, capable of receiving a title on a dedicated channel, and displaying the same on a subscriber TV; SSTBs at homes of the rest of the subscribers' houses within each cluster, for receiving at low traffic hours one or more content titles, or portions of content titles, for storing the same, and for transmitting upon demand on at least one designated channel any ordered title to one or more STBs or SSTBs of ordering subscribers; and a Management System for storing a plurality of titles, for transmitting titles to SSTBs within a cluster at low traffic hours, for transmitting a list of titles available for viewing to all STBs and SSTBs within each cluster, and for managing any demand for viewing from users' set top boxes, and conveying such demand to the one or more SSTBs storing the demanded title, for initiating transmission of the requested title from the one or more SSTBs to the set top box of the demanding subscriber.

Optionally, the transmission of a title from an SSTB to an SSTB or STB within a cluster is enabled, while the transmission of a title from an SSTB to an SSTB or STB within another cluster is being blocked by means of a Line Extender located at the entrance to the cluster. The Management System may also manages the billing of demanded titles.

Each SSTB preferably comprises storage for at least one title or portions of a title, and communication means for conveying status commands, and execution commands to either STBs or SSTBs within its cluster, and to the Management System.

According to another embodiment at least two clusters are being extended by means of modifying the Line Extenders of the clusters to enable transmission out of the clusters. Optionally, the cluster extension extends the cluster to include all subscribers within a node, and the links within a cluster are made by means of coax cables, and splitters.

The SSTB preferably includes:

    a) a first and a second Video Channel Receivers for concurrently receiving titles transmitted on different channels;
    b) an Interactive Channel Receiver for receiving information and control data from the Management System;
    c) an Interactive Channel Transmitter for transmitting requests and status information to the Management System;

d) an information data Bus;

e) one or more memories capable of receiving and storing data provided via the information data Bus;

f) a Storage and Controller unit for managing SSTB operations;

g) an Encryption unit for encrypting information provided on the Bus;

h) a CPU unit for processing and carrying out SSTB operations;

i) a Demultiplexer for selecting multiplexed information provided on the Bus;

j) an MPEG decoder capable of decoding MPEG data provided on the Bus or via the demultiplexer;

k) a virtual multiplexer capable of multiplexing a plurality of title data provided on the Bus, to at least a single channel; and

l) a Video Channel Transmitter capable of transmitting data from the virtual multiplexer on cable Network channels.

Optionally, a plurality or all of the subscribers within a cluster are provided with an SSTB.

## Brief Description of the Drawings

In the drawings:

- Fig. 1 illustrates a centralized cable network According to the prior art;
- Fig. 2 shows a cable network utilizing SSTBs according to a preferred embodiment of the invention;
- Fig. 3 illustrates the clusters structure in a cable network, according to the prior art and the present invention;
- Fig. 4 is a block diagram illustrating the structure of a typical STB, which is also used in the system of the present by the invention;
- Fig. 5 is a block diagram illustrating the structure of an SSTB according to the present invention;
- Fig. 6 illustrates the structure of a typical line extender according to the prior art;
- Fig. 7 illustrates the structure of a modified (bypassed) line extender according to one embodiment of the present invention;
- Fig. 8 is an electrical scheme of a conventional splitter;
- Fig. 9 is a block diagram illustrating the typical connectivity of nodes, clusters, and subscribers, in a cable network according to the prior art and the present invention;
- Fig. 10 a block diagram illustrating the communication flow in a conventional cable networks;
- Fig. 11 is a block diagram exemplifying a communication flow in the cable network according to the present invention;
- Fig. 12 is a functional flow diagram illustrating the operations performed by the system of the invention.

## Detailed Description of Preferred Embodiments

The present invention introduces new solutions for the storage, distribution and management of video and other "Content on Demand" for Cable TV networks. These solutions are based on storing the content in the users' set-top boxes, rather than at some central site as in prior art. By distributing the content across multiple users and managing virtual and real "peer-to-peer" connections among users, substantially more content can be supplied at the same price for more users simultaneously, and in substantially higher rates. This solution requires only about 10% of the bandwidth and offers a significantly lower Life Cycle Cost (LCC) as compared to other solutions. The invention achieves all these goals utilizing the existing infrastructure without or with minimal modifications to the network. The "peer-to-peer" concept is implemented in the invention to store content in the subscribers' set top boxes, and to enable rendering content delivery far more efficiently and scalable, while using a fraction of the bandwidth required by current solutions.

The present invention is characterized by the distribution of the content storage and the streaming capabilities among the users, and locating portions of the storage within STBs at the users' homes. Each content is preferably first transmitted from a Management System (MS) to one or more dedicated users' set-top boxes at low traffic hours (i.e., hours in which low percentage of the users require MS services), received and stored there, and delivered on demand by means of peer-to-peer connections from the storing STB to an ordering STB.

Fig. 1 illustrates a VOD cable system according to the prior art. A plurality of titles, $title_1,..., title_n$, are stored at the central management system 51. Upon request from, for example a user's STB 10, the central management system 51 transmits each ordered title to the ordering STB 10. A plurality of STBs 10, generally about 50-60 form one cluster of users that are connected by means of coax cables, and are separated by a Line Extender (LE). Several clusters 30-1 through 30-$n$ form a node. The connection between the central management system 51 up to point 40 is carried out by means of fiber optics. Down of this point, the connections within the node, and the clusters of the node are performed by means of coax cables 52. Generally the number of clusters within one node is up to 20. Within the cluster, the distribution to the users is made by means of splitters (SP). Furthermore, the central management system 51 comprises a billing sub-system and a conditional access sub-system for billing and title piracy prevention accordingly. According to the prior art, the central management system 51 transmits to the users a plurality of TV channels via several channels that are designated for video on demand, enabling a limited number of users within each node to order and receive video titles on demand. The communication of the orders is conveyed from the users to the management system by means of a dedicated interactive channel, which is also used in the other direction for transmitting management data, such as a list of the scheduled programs or the monthly bill from the central management system to specific STBs.

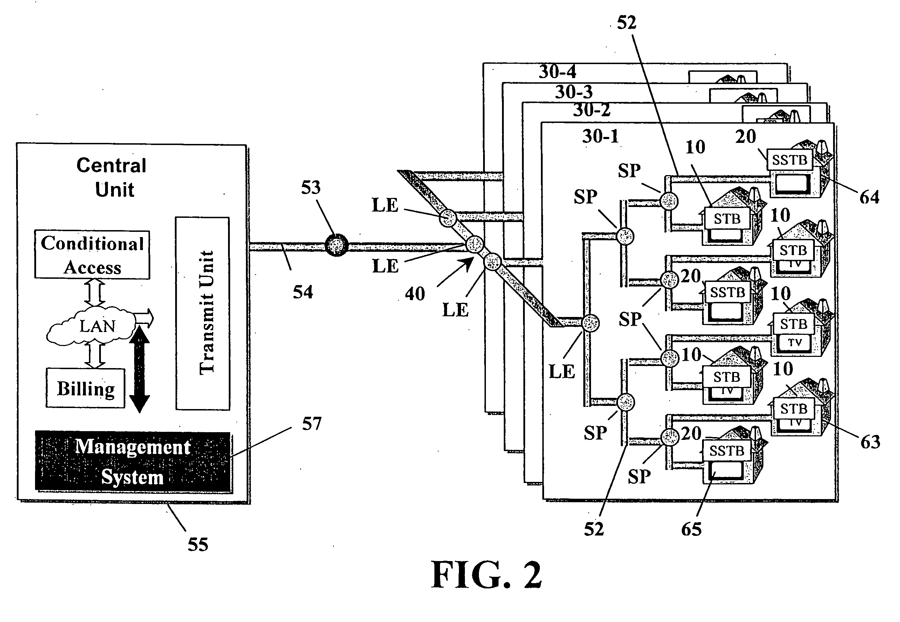

According to the present invention shown in Fig. 2, some of the STBs within each cluster are replaced by Storage Set Top Boxes (SSTBs) 20. Each SSTB 20, aside from its conventional structure which remains the same, comprises a dedicated storage for storing at least portions of video programs. Preferably, each video program is divided between plurality of set-top boxes 20, and moreover, each video portion is stored within at least two boxes, to provide a backup to each video portion if one STB fails to properly transmit its stored content.

More specifically, according to a preferred embodiment of the invention the Central Unit 55 is used to mediate between users in geographical proximity. Each set-top box preferably contains about 10 to 100 GB of storage space, and capable of concurrently streaming to the coax cable several titles. This implementation requires only 10% of the bandwidth in comparison to the conventional centralized solutions, and can be implemented keeping the network as is, utilizing the existing infrastructures.

The present invention provides a Peer-to-Peer Distribution (PPD) (hereinafter, the term "peer-to-peer" refers to a transmission of content or management data from one SSTB to another, or to a regular STB), allowing the delivery of a greater number of titles to more users simultaneously, in comparison with the conventional centralized systems of the prior art, as shown in Fig. 1. Consequently, the PPD system of the invention provides rich content distribution services. One example of the abilities of the PPD system of the invention is the broadcasting of TV on demand. Such implementations are designed to display the user a list of all today's broadcasts, with no broadcast schedules. The user is then capable of choosing any program, even the latest news and is able to view this program on demand or even to build a desired schedule of programs. Other examples for COD services are TV Internet and mail, gaming and music on demand. In addition, using content Management systems for the wide-band Internet service allows provision of much faster and less bandwidth-demanding Internet services to all users since a huge number of Points of Presence (i.e., content sources) are available.

More particularly, in a preferred embodiment of the invention each SSTB is capable of acting as an Internet Server, and utilize the existing channels which are dedicated for Internet services, to initiate an Internet Protocol (IP) session through the Management System. In such preferred embodiment each user is capable of carrying out an Internet session via the STB or SSTB which provides a video display of the Internet session via the users T.V.

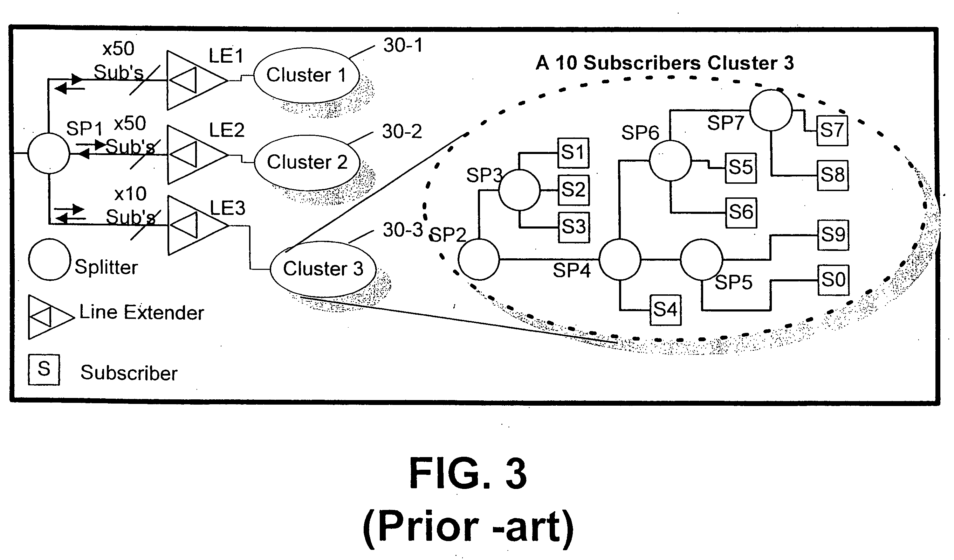

A typical coax network that is part of the whole Hybrid Fiber-Coax (HFC) network branches via splitters (SP1, SP2, SP3, ... ), as shown in Fig. 3, and keeps the required signal-to-noise ratio along the chain by using Line-Extenders (LE1, LE2, ...) which are two-way line amplifiers and filters. Peer-to-peer connections (i.e., connection between STBs or SSTBs) through typical HFC networks are possible among subscribers (S0, S2,..., S9) that are members of a same cluster (for example, cluster 30-3). More particularly, the connection is possible between members of a cluster that are interconnected through Splitters (SP) and not buffered by Line-Extenders. Transmission between subscribers is performed on downstream *broadcast channels* (i.e. dedicated channels in the high band). The transmissions within cluster 3 are visible to all subscribers (S0-S9) located after the last Line-Extender (LE3) since any two of these subscribers are connected via the outputs of a splitter (e.g. subscribers S0 and S8 are connected via two outputs of splitter SP4, although other splitters may also exist between them). On the other hand, subscribers in other clusters, such as cluster 1 (30-1) and cluster 2 (30-2) of Fig. 3, cannot view these high-band transmissions since they are blocked by the Line-Extenders (LE1 and LE2) which are designed to pass high-band transmissions only down the RF chain, i.e., to their clusters, 30-1 and 30-2 and 30-3, and not in the other direction.

With reference again to Fig. 2, a set of Storage Set-top Boxes 20 (also referred to as SSTBs are located in some (e.g. 10%) of the subscribers' houses, instead of the conventional digital STBs 10 of the prior art. Each SSTB 20 being capable of transmitting video streams to any digital set-top box, either STB 10 or SSTB 20, residing within the same cluster, of the cable Network infrastructures. However; as will be discussed herein later, streaming capabilities between SSTB and STB/SSTBs residing in different clusters can also be performed according to the invention, by means of a simple modification of the LE elements. The system of the invention can use the standard HFC (Hybrid Fiber Coax) network and the standard DVB/DAVIC or DOCSIS protocol to provide VOD and other Content on Demand services to the digital subscribers of the Network.

Downloading new titles to SSTB's - For each new title, the Management system 57 determines on which SSTB's 20 a new title will be stored and sends *storage commands* to each said SSTB via the downstream interactive channel. Then the title is encoded and broadcasted to the said appropriate SSTBs 20. Once the broadcast ends, the title is stored in the designated SSTB's and is ready for streaming on demand. Preferably, in order to prevent copying and copyright breaches, a full title is never saved within a same SSTB, but is divided, and stored within a plurality of SSTBs.

Electronic Program Guide (EPG) update - The Management System distributes EPGs to all digital subscribers (STB 10 and SSTB 20) utilizing conventional methods commonly used in digital TV Networks. Downloading of new titles and EPG updates is preferably performed during low traffic hours , for example, between 3:00 to 4:00 A.M.

Receiving a request to view a title - Whenever a subscriber selects a title, the STB 10 or SSTB 20 sends a request for a selected title via an upstream interactive channel, to the Management System 57.

Issuing a *streaming command* - Upon receiving a request to view a title, for example from user 63 of Fig. 2, the Management System 57 locates two SSTBs (for example 64 and 65) residing in the same cluster as the requesting subscriber's STB/SSTB 63 and containing the requested title in their storage. One of these SSTBs, for example SSTB 65 is assigned a streaming role (Streaming SSTB) while the other, for example SSTB 64, is assigned a monitoring and backup role (Monitoring SSTB) by the Management System 57. These assignments are sent to the relevant SSTB's 64 and 65 by the Management System 57 together with the designated channel (i.e. high-band frequency and position in the MPEG-2 stream) for streaming of the title.

Streaming Monitoring and Backup - Upon receiving a *streaming command* from the Management System 57, the Streaming SSTB 65 starts streaming at the designated channel and notifies the Management System 57 of doing so. The Monitoring SSTB 64 tunes to the designated channel and monitors the integrity of the stream. In any event of failure, the Monitoring SSTB 64 starts streaming the same title from the last transmitted frame, thus serving the role of providing a hot backup.

*Stop, Pause, FF* and *Rewind* - A subscriber who orders a title is provided with the options of issuing these commands while viewing a title. The appropriate commands are sent to the Management System 57 via the upstream interactive channel, causing the Management System 51 to issue a corresponding command via the downstream interactive channel to the Streaming SSTB 65.

Recording and viewing selected programs - The PPD solution according to the invention is also utilized in the preferred embodiment to provide the subscribers DVR (Digital Video Recording) services. This type of services is mainly directed to programs transmitted in common commercial channels (e.g., sport programs). Whenever a subscriber requests a DVR service for a specific program, at least two SSTBs are selected by the Management System 57. The selected SSTBs are instructed by the Management System 57 to record the selected program, and store it. When a subscriber who ordered a DVR service wishes to watch the recorded program, a corresponding request is transmitted from the subscriber's STB/SSTB to the Management System 57.

When the Management System 57 receives a request for viewing a program that was recorded by a DVR service, it initiates a streaming command to the corresponding SSTBs, in a similar way as performed for a title requested in a VOD service. Namely, a streaming and a monitoring SSTBs, on which the desired program is stored, are selected, and the recorded program is then transmitted from the streaming SSTB to the requesting subscriber's STB/SSTB.

The Management System 57 according to the present invention comprises a central server (not shown) that is connected to the upstream and to the downstream interactive channels, as well as to a downstream video channel. The connection to the interactive channels can be performed via a DVB or a DOCSIS Headend cable modem as known in the art, and the connection to the video channel may be implemented via an MPEG-2 Multiplexer and a DVB/DOCSIS converter, as it is generally done at the Headend for conventional video broadcasting.

The Management System server performs the following tasks:

- Implementing the Splitting of the content, which will be discussed hereinafter;
- Content distribution to the storage location at low traffic hours;
- Smart content location and adequacy Management;
- Content selection menu (EPG) preparation and distribution;
- Directing the viewer equipment to the content location, the channel, and the addresses of the relevant equipments;
- Automatic, real-time malfunction identification and correction, including activation of backups;
- Billing; and
- Reports & statistics.

The splitting of the content

In a preferred embodiment of the invention the content that is stored at the SSTBs 20 is protected. Any stored title is split to several SSTB's 20 so that a whole title never resides in one house or SSTB. The Management System 57 performs the title slicing and distribution, and routes the sliced content accordingly to the STB or SSTB of the viewer.

The server of the Management System 57 receives an input of a single title that is already recorded on a trusted storage media i.e., CD, DVD, etc. The recorded title is MPEG-2 compressed and encrypted using a standard off-the-shelf, Conditional-Access device. The cryptographic key required for decryption is provided as part of the storage media.

The Management System 57 manages a data base relating to each title (or title slices), the address locations of its slices within SSTBs 20 and thus, enables deletion of old titles and addition of new titles when required. Deleting a title is performed by means of broadcasting of a respective message to the SSTBs 20, specifying the *title ID*, the SSTB address (SSTB ID) and the location within the SSTB storage. Storing a new title is initiated by issuing a broadcast or multicast message to the SSTBs 20. The *Store-new-title message* includes the title (or title slice) ID, title/slice *location* in the SSTB storage, title *broadcast time* and title *broadcast channel.* Upon receiving such a message, each SSTB 20 tunes a dedicated tuner to the specified channel frequency, de-multiplexes the specified MPEG-2 channel, and stores the transmitted title/slice in its storage, at the specified *location.* This process is preferably performed at pre-selected low traffic hours.

The Management System 57 monitors the usage of the stored titles and creates copies of the titles (or title slices) that are used most. These copies are made to selected SSTBs 20 (target SSTB) in a similar manner to the distribution of new titles, as previously discussed hereinabove. Unlike the distribution from the Management System 57, the title/slices are streamed to the ordering SSTB from an SSTB 20 within the same cluster, and not from the Management System 57. This process can be performed while a subscriber within the same cluster views the same title. This process of duplicating titles/slices within a cluster is used both to overcome high concurrent demand for a title and, to increase the number of title copies within a cluster. Malfunction of an SSTB 20 is deduced from SSTB status report and SSTB reply to Management System commands. The SSTBs periodically report their status to the Management System 57 (e.g., every few minutes) and reply to streaming requests of the Management System 57 when requested.

The preparation and distribution of the Electronic Program Guide is carried out using the same methods as used in conventional centralized VOD systems.

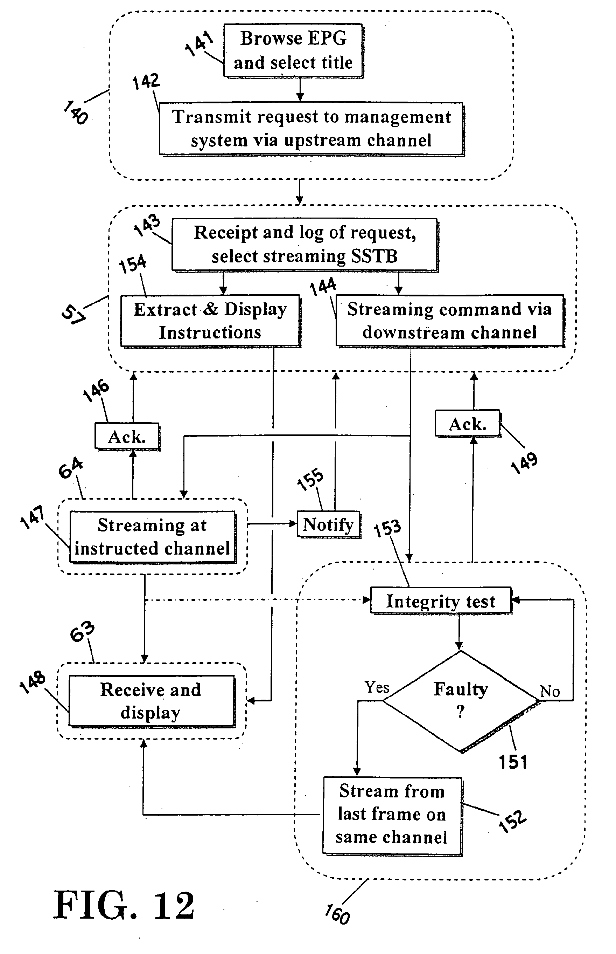

Fig. 12 is a flow diagram showing the operation of the system, according to a preferred embodiment of the invention. With reference to Figs. 2 and 12, when a subscriber 63 having an STB 63 (or an SSTB) browses the EPG, selects and orders a title from the EPG, the viewing request (step 142) of the subscriber identifies the requested title and the subscriber STB. Upon receiving a viewing request from a subscriber 63, the Management System 57 selects an SSTB 20, for example SSTB 64 in which the requested title (or the first slice of the title) is stored (step 143), and a free streaming channel in the specific cluster 30-1, via which the title is streamed. In accordance with these selections, the Management System 57 instructs (step 144) the selected SSTB 64 to stream the title on the selected channel, and the receiving STB or SSTB 63 to extract and display the channel (step 154).

When issuing a *streaming command* to an SSTB, the Management System 57 selects another SSTB 65 on which the title or title-slice is stored to monitor and backup the streaming SSTB 64. The monitoring SSTB 65 monitors the streaming on the designated channel, and in case that the streaming is interrupted or fails, SSTB 65 starts streaming the missing slices (step 152).

The Billing for each provided service is performed, for example, using off-the-shelf API. The Management System 57 outputs each viewing transaction to the billing system, which in turn respectively charges the subscribers.

All the system activities can be logged. These logs can then be used for the creation of CATV operator defined reports, and CATV operator defined statistical calculations.

Digital Set-top Boxes (STB)

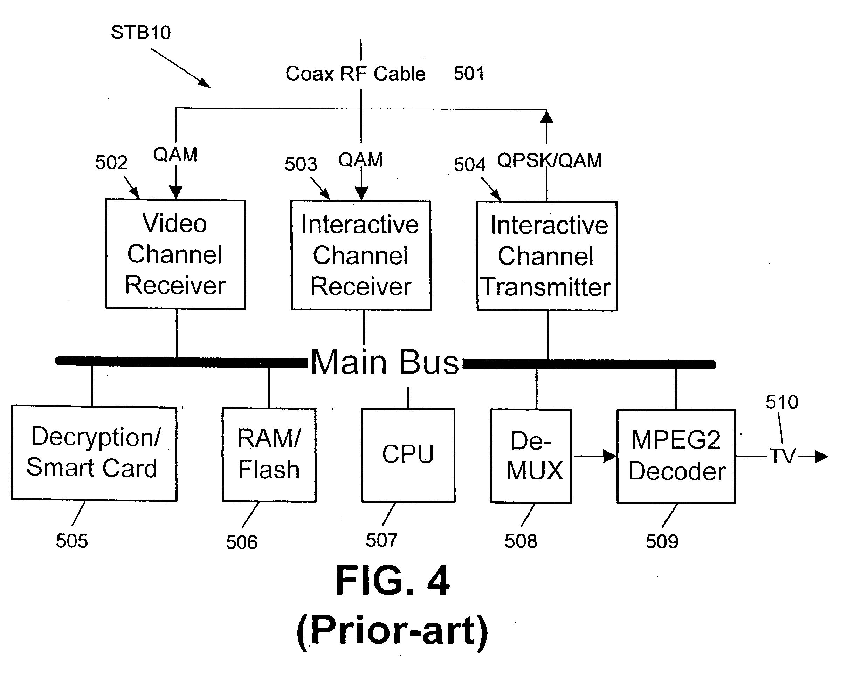

Fig. 4 shows typical structure of the STB 10. The STB 10 interacts with the equipments at the Central Management System 51. *Please check that I am correct]* by means of the RF Coax Cable 501, using an in-band or out-band interactive channel receiver 503. Receiver 503 is used to receive system instructions and data (according to ETS-300-800 or DOCSIS) from the Central Management system 51 (shown in Fig. 1), and transmit data via an interactive channel transmitter 504 (using Quadrature Phase Shifting Keying (QPSK) or QAM modulation, preferably according to ETS-300-800 or DOCSIS). A separate video channel receiver 502 is implemented as defined in ETS-300-429 and is used for video channel reception and demodulation. The output of the video channel receiver 502 is an MPEG-2 multiplexed stream which is routed to the De-multiplexer 508 and via the MPEG-2 Decoder 509 to the TV set 510. The decoding process is performed using the Decryption module 505 so that the stream is decompressed and decrypted at the same time. The CPU 507 manages title viewing and interaction with the Central Management System 51. The CPU 507 uses RAM and/or Flash memory 506 for local operations and in order to store commands, preferences and other related material (e. g., EPG). The CPU 507 and memory 506 may also be used for executing games and interactive video programs in which some of the output to the TV 510 comes from the video stream and some is created and displayed on top of the video picture internally.

The STBs 10 are used in the proposed embodiment in a similar manner to the way they are used in conventional cable systems, and in accordance with DVB and/or DOCSIS standards. By using the STB 10, a subscriber can select a *broadcast channel,* experience interactive games, and select a title for viewing on demand.

Storage Set-Top Boxes (SSTB)

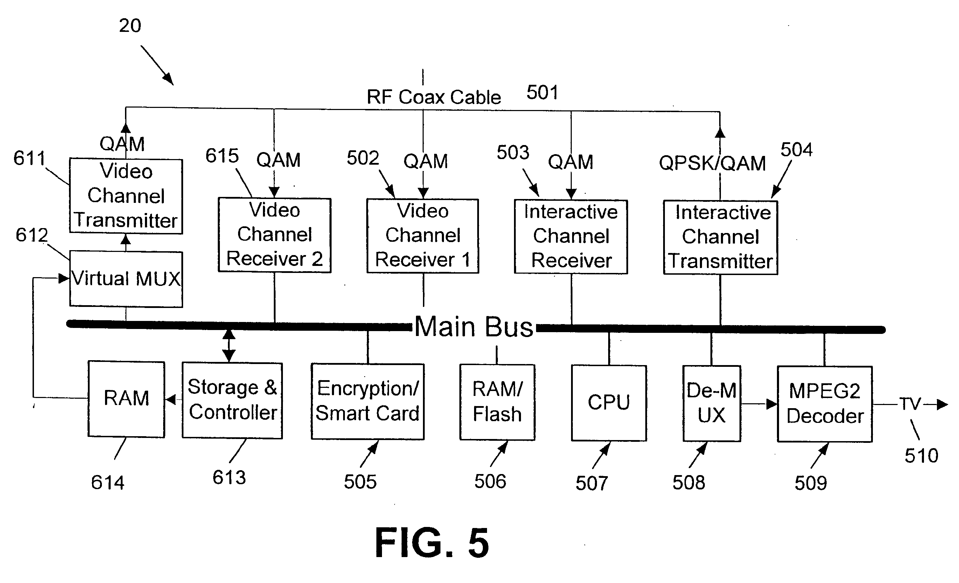

With reference to Fig. 5, according to the present invention, a smart STB, which is termed herein as Storage STB (SSTB), is used at some of the subscriber's houses. Each SSTB 20 has, in addition the elements of a typical digital STB, the following components:

- Storage 613 and its associated controller, which may be, for example, of a size between 50 to 100 GB, and which may be expanded when adequate higher capacity memory devices become available on the market;
- Streaming capability of four concurrent streams implemented as part of the CPU 507. It should be noted that the number of streams may be increased when newer CPU models become available on the market;
- Additional RAM 614, which may be implemented utilizing some types of fast memories known in the art;
- Virtual multiplexer 612 (discussed herein bellow);
- A Video Channel Transmitter 611 that modulates and transmits the multiplexed video signal through the coax cable 501; and
- An additional Video Channel Receiver 615.

The storage 613 is used to store titles or parts of titles (slices). The titles/slices are stored as they are received from the Headend (i.e., after MPEG-2 compression and smart card encryption). Streaming is preferably performed in accordance with the standard used by any specific operator for streaming of video. The stored titles/slices are virtually multiplexed with titles that are being streamed from other SSTB's 50 by the virtual multiplexer 612. The program stream that is being transmitted from each SSTB 20 is preferably modulated by using 64 or 256 QAM (Quadrature Amplitude Modulation) in the video channel transmitter 611 in order to match the receiving capability of common digital set-top boxes (10). Transmission is performed in the 70-860 MHz band. The transmitted power is very low since the transmitted signal should reach only users within the same cluster, generally in the same neighborhood. The additional video channel receiver 615 is used for the reception of downloaded titles/slices (generally during low traffic hours) and for monitoring of streaming performed by other SSTB's. All instructions to the SSTB 20 and messages from the SSTB 20 are preferably transmitted similarly to the way it is done by conventional digital STB 10.

In addition to the functionality of a regular STB 10, the SSTB 20 enables streaming and transmission of several titles in the high-band downstream video channel to subscribers that share the same cluster. The SSTB 20 can receive titles/slices for storage, store about 60 titles (assuming 50-100GB storage), and monitor other SSTBs within the cluster as they stream.

Line Extenders

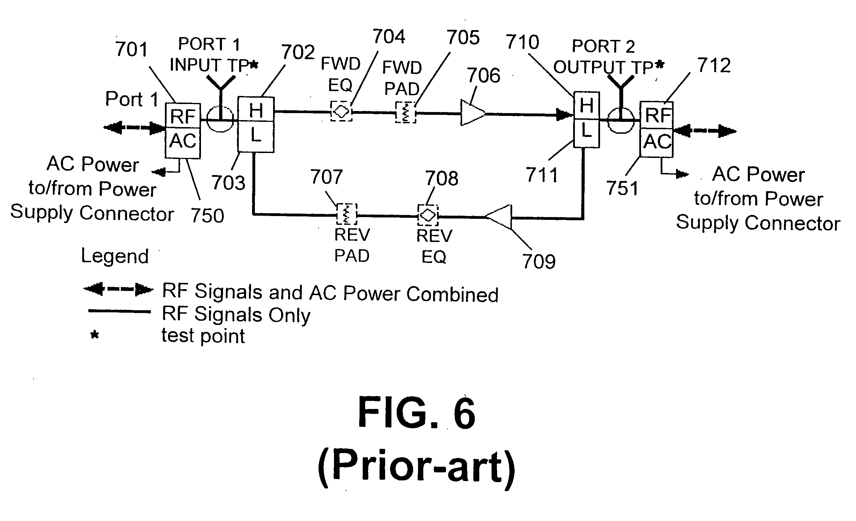

A principal block-diagram of a conventional Line Extender is depicted in Fig. 6.

Port 1 is connected to the upper part of the RF chain (i.e. towards the Central Management system 51) while Port 2 is connected to the lower part of the RF chain. The RF/AC splitter 701/750 receives its AC power via the coax cable and transfers this power to the active components within the Line Extender and via the other RF/AC splitter 712/751 to other line extenders down the RF chain. The high band RF transmission is received at port 1 and passed via the high band-pass filter 702, Equalizer 704, Attenuator 705, gain controlled amplifier 706, and High band pass filter 710, to Port 2 and the coax down the RF chain. The low band RF transmissions are received at Port 2, pass via a low band-pass filter 711, amplified by gain controlled amplifier 709, equalized by Equalizer 708, attenuated by Attenuator 707, and passed up the RF chain via another low band-pass filter 703 to Port 1. High band transmissions can not pass from Port 2 to Port 1 and low band transmissions can not pass from Port 1 to Port 2.

Line Extenders are used as line amplifiers for high band RF down the chain and at the same time as line amplifiers for low band RF up the chain. Besides the regular use of Line Extenders, they are used by the system of the invention to block in-cluster high band content transmissions between two set up boxes from reaching the Management System 57 and from reaching subscribers at corresponding clusters. This fact enables the PPD (Peer-to-Peer transmission from one SSTB to another STB or SSTB) system to re-use the same transmission bandwidth in each cluster since high band transmissions that are performed within one cluster are invisible to all other clusters, as they are blocked by one or more line extenders.

A cluster in PPD system is defined as any group of subscribers that are connected to Port 2 of a Line Extender with no intermediate Line Extenders.

In one preferred embodiment of the invention, a typical cluster consists of about 50 to 60 subscribers.

Bypassing the Line Extender

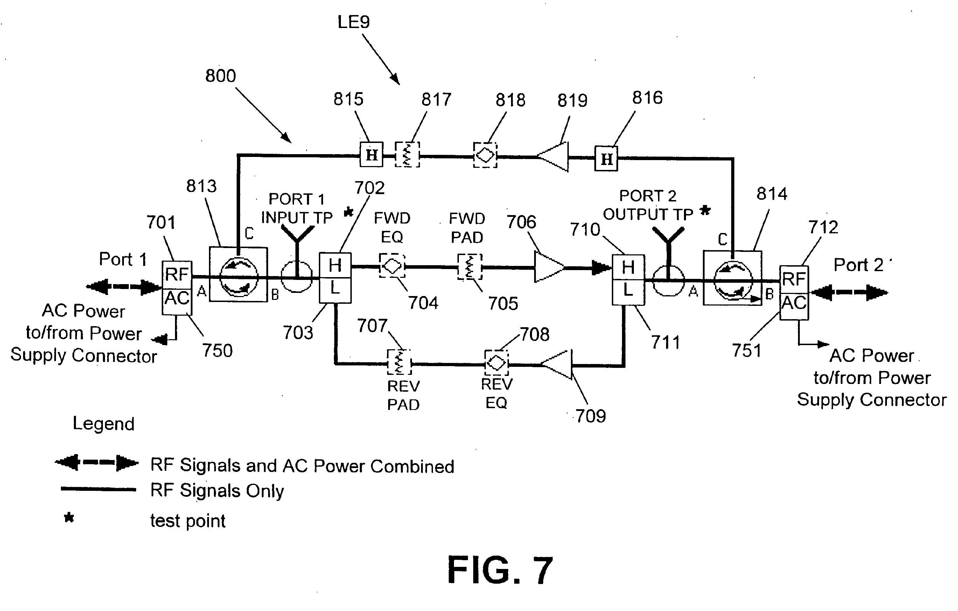

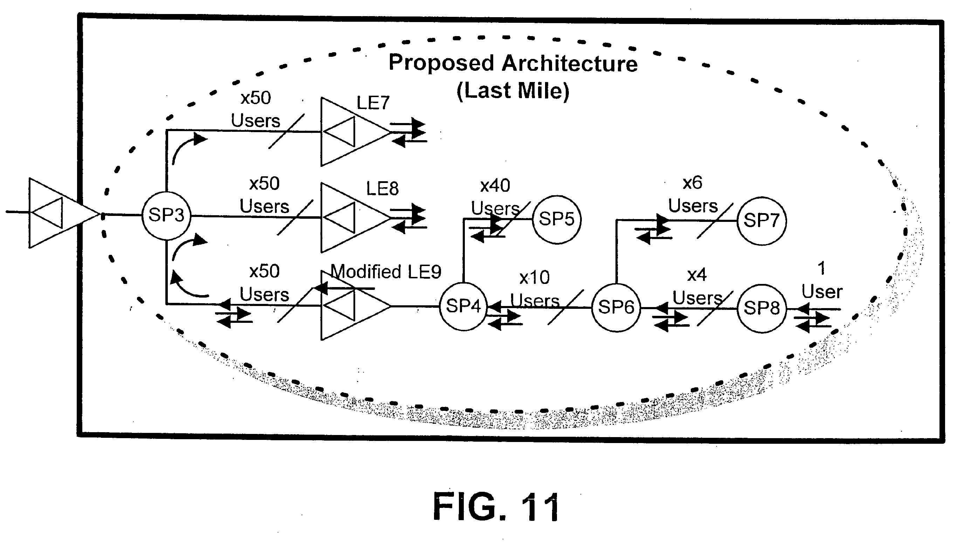

In some cases, it may be desirable to enlarge the number of users within one cluster, or more particularly, to form a group of users larger than a cluster, within which the VOD services are provided. This can be done by bypassing the Line Extenders (LE) at the lower end of the RF chain, as shown in Fig. 11. An exemplary implementation of such a bypass is depicted in Fig. 7. In Fig. 11, the LE9 is modified to enable the 50 users below LE8 and the 50 users below LE7 to join the cluster below LE9. The modified LE9, which is bypassed as shown in Fig. 7 allows high-band transmissions to pass from the lower part of the RF chain (Port 2) to the upper part of the chain (Port 1) without causing feedback at these frequencies.

With reference to Fig. 7, one possible implementation for the above modification to LE9 is the usage of circulators (813 and 814). Circulators 813 and 814 allow normal signal flow between points A & B, while circulator 814 enables signal coming from Port 2 to go through the bypass 800 and circulator 813 allows signal received from the bypass 800 to pass through to Port 1, but not to Port 1 input TP. The bypass 800 includes amplification and equalization (819 and 818 - which are optional), filtering (815 and 816) and attenuation (817) stages. It should be noted that bypass 800 can be implemented as part of the Line Extender or as an external unit.

Splitters

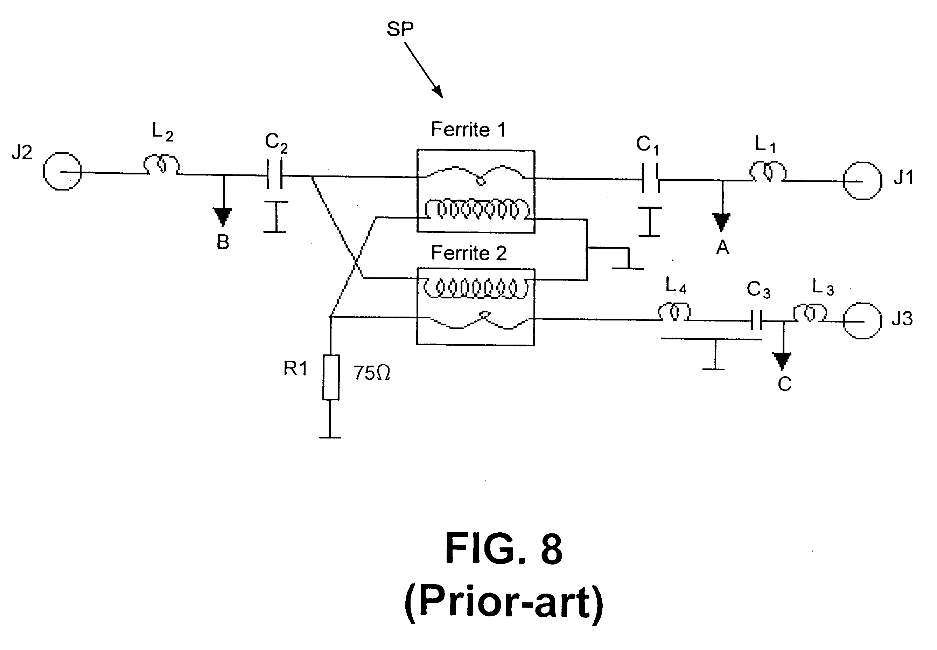

A scheme of a typical splitter is depicted in Fig. 8. The splitter is a passive module that performs the following functions: It receives the high band transmission from the (Central Management system 51) upper part of the RF chain (J1) and splits it to few (typically 2) outputs down the chain (J2 and J3). At the same time, the splitter receives transmissions (usually the low-band RF transmissions) from the lower part of the RF chain, sums these transmissions and transmits the summed output up the RF chain (J1). The attenuation between J1 and J2 is between 1dB to 3 dB in both directions. The attenuation between J1 and J3 in both directions is typically (3dB) × (*Number of splits*). The attenuation between any two outputs (J2 and J3 - inter-output attenuation) is typically 25 dB.

The splitter is usually used to distribute the high band transmissions to several subscribers and/or to other parts of the RF chain. It is also used to sum the low band interactive channels on their way up the stream. The third function of the splitter is to prevent inter-subscriber interference by introducing high inter-output attenuation.

The splitters in the Peer-to-Peer Distribution (PPD) system of the invention should allow transmission between subscribers at the same cluster. The inter-subscriber attenuation between any two subscribers in a cluster is 25 dB plus the *number of splits* times 3dB since the signal has to go through only one inter-output attenuation. Therefore, if for example assuming that 6 splits are used (e.g., for 64 subscribers), than the smallest attenuation between any two subscribers is 25dB and the largest attenuation is 18+25=43dB.

For example, in Fig. 3, the attenuation between subscriber S0 and S9 is 25dB (inter-output attenuation of SP5), while the attenuation between S0 and S7 is 43dB (inter-output attenuation of SP4 and splits attenuation of SP4, SP5, SP6, and SP7).

A minimal power is required for the transmission of the SSTB 20. If, for example, the transmission power is 5 micro watt (-23dBm), the highest input to any subscriber is -48dBm which is within the standard range, while the lowest input to any subscriber is -66dBm which is also within the standard range.

Cable TV Network Structure

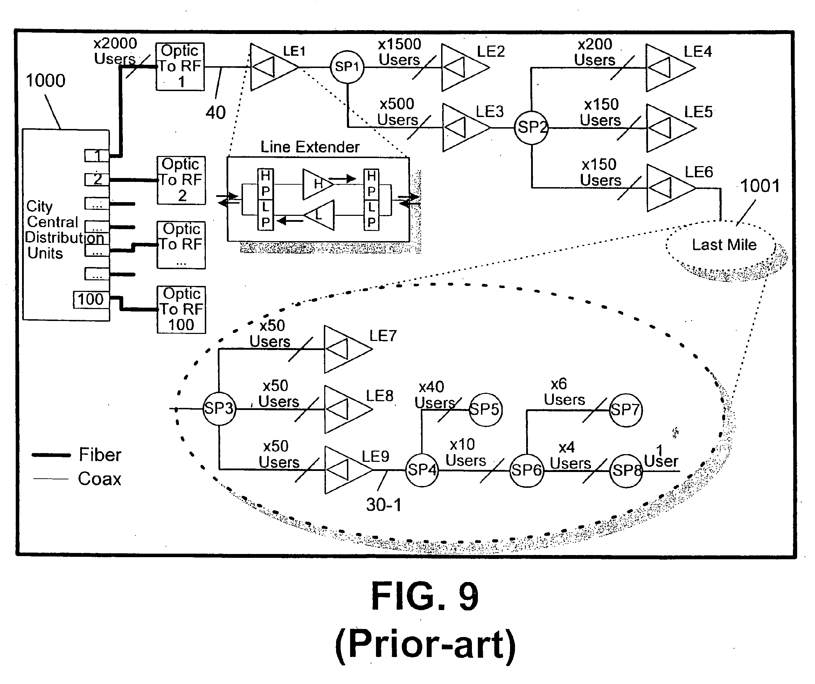

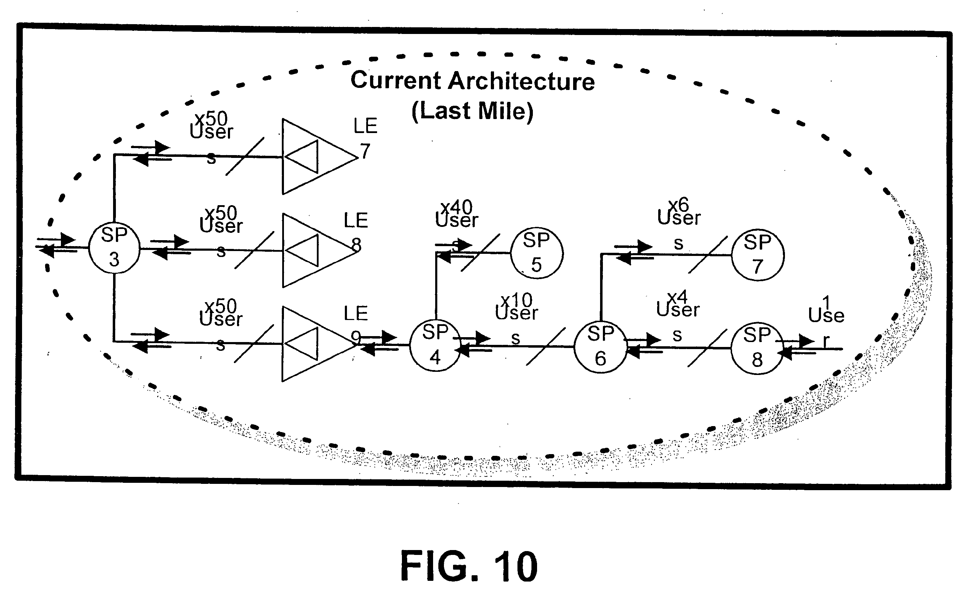

Most cable TV operators today use a network structure as depicted in Figs. 9 and 10. Optic fibers are used to distribute the video from the Central Distribution Units 1000 to groups of 500 to 2000 users. At the end of each fiber, the signal is transformed into RF at 5-40 MHz upstream and 50-860 MHz downstream (Optic to RF 1 to 100). Two building blocks are used for the RF chain: Line Extender (LE1 to LE9) and Splitter (SP1 to SP8). By using these two building blocks and coax cables, the RF is distributed to, and collected from, each end user. The Splitter is a simple matched connection with 25 dB isolation between outputs, and the Extender is composed of amplifiers and band-pass filters so that the lower bandwidth is amplified in the upstream direction and the upper bandwidth is amplified in the downstream direction. Note that the final ~50 users (part of the Last Mile 1001) are interconnected directly via the coax cable with no intermediate Line Extenders.

The Cable TV Network Structure reveals that the last 50-60 users (e.g., the users connected via LE9) are interconnected directly via the coax cable with no intermediate Line Extenders (see Fig. 10). This means that these users can communicate with each other without any modifications to the network structure, while this communication is invisible to users at other clusters, and thus allowing reuse of the same bandwidth at separate clusters. LE9 blocks high-band transmissions originating down the chain so that any subscriber down LE7 and LE8 can not receive these transmissions.

Modifying Network structure

Although the implementation presented in the previous paragraph is applicable, using clusters of 150 users is more flexible and allows storage of more titles to more users simultaneously at the same price. Fig. 11 shows a modified last mile architecture for satisfying this requirement. Enabling direct communication between clusters of 150 users requires a simple bypass of the last Line Extender at each RF chain (e.g. LE9 in Fig. 11). The proposed modification enables the transfer of part of the higher bandwidth across the last Line Extender (LE9), allowing the RF to be distributed via the splitter (SP3) above this Line Extender to the other Line Extenders (LE7 & LE8) connected to this distributor and to the 100 users fed by these Line Extenders. A preferred embodiment for a modified LE is depicted in Fig. 7.

Storage & Concurrent Viewers

The storage size and streaming capability per SSTB 20 as described herein is based on the assumption regarding the percentage of SSTB out of total number of digital subscribers. It is possible, and indeed likely, that certain CATV operators will use different ratios. In such a case, the required storage and streaming capability per SSTB 20 should change according to the following formula:

$$S_{size} = {}^{T_{size} \times (1+redun)}/_{(Penetration \times Cl_{size})}$$

Wherein:

- $S_{size}$ is the SSTB storage size;
- $T_{size}$ is the number of stored titles times the storage size per title;
- *redun* is the percentage of redundancy required;
- *Penetration* is the percentage of SSTB units in a cluster; and
- $Cl_{size}$ is the average number of subscribers per cluster.

For example, if:

$T_{size}$ equals 1.5 GB $\times$ 60 titles ~= 100 GB;
*redun* equals 400%;
*Penetration* equals 10%; and
$Cl_{size}$ equals 50.

Then, the required SSTB storage size $S_{size}$ is of about 100 MB:

$$S_{size} = {}^{100 \times (1+4)}/_{(0.1 \times 50)} = 100 MB$$

In another example, if:

- $T_{size}$ equals 1.5 GB $\times$ 60 titles ~= 100 GB;
- *redun* equals 400%;
- *Penetration* Penetration equals 50%;
- $Cl_{size}$ equals 50; then,

the required storage size obtained is of about 20 MB:

$$S_{size} = {}^{100 \times (1+4)}/_{(0.5 \times 50)} = 20 MB$$

In addition, the streaming capability per SSTB 20 may be altered for the same reasons according to the following formula:

$$Strcap = Concurrent \times {}^{(1+redun)}/_{(Penetration)}$$

Wherein:

- *Strcap* is the SSTB streaming capability (number of concurrent streams);
- *Concurrent* is the percentage of concurrent viewers during prime time;

- *redun* is the percentage of redundancy required; and
- *Penetration* the percentage of SSTB units in a cluster.

Thus, if for example, *Concurrent* equals 10%; *redun* equals 300%; and *Penetration* equals 10%. Then, the *Strcap* obtained equals 0.1 $\times$ ${}^{(1+3)}/_{(0.1)}$ = 4 streams.
In another example, if *Concurrent* equals 10%, *redun* equals 300%, and *Penetration* equals 50%, then, the *Strcap* obtained equals (0.1 $\times$ ${}^{(1+3)}/_{(0.5)}$ = 0.8), i.e., about 1 stream.

Signal Flow

*Store Title Command* is issued from the Management System 51 to an SSTB 20 for storing a title (or title slice if a Storage Splitting is used) in a designated *location*. The command is issued either as a broadcast, or as a multicast message on the downstream interactive channel. The Management System server utilizes a cable modem in order to send the command. The command is sent according to the communication standard used by the CATV operator (ETS-300-800 or DOCSIS). The command includes the following parameters:

- *Title ID* (or Title and slice ID);
- Designated *location,* i.e., the SSTB ID;
- Title/slice *broadcast time;*
- *Broadcast channel* (center frequency);
- *Broadcast program location* (within the MPEG-2 stream); and
- The actual *Title* data.

A title/slice, is broadcasted on a designated channel and is being stored by the SSTB 20 within its local storage. When the *title broadcast* is terminated, the title/slice is stored and ready for streaming the content on demand. The SSTB 20 issues a storage complete message to the Management System 57. The broadcasted title/slice is pre-encrypted and MPEG-2 coded, and stored as such at the SSTB 20.
A *Storage Complete Message* is sent on the upstream interactive channel according to the communication standard used by the CATV operator (ETS-300-800 or DOCSIS). In case that this message is not received at the Management System 57, the process is repeated, or the SSTB is declared as malfunctioning.

Distributing Electronic Program Guide

EPG is distributed from the Management System 57 via the in-band or out-band downstream interactive channel to all digital subscribers (STB 10 and SSTB 20) preferably in the same manner used for EPG distribution in any digital TV Network. After updating a title at the SSTB 20, an EPG that reflects the change in title selection is updated and re-distributed.

Title Selection - Subscriber issuing a request to view title

When any subscriber pages the EPG and selects a title (step 141 in Fig. 12), whether this subscriber uses STB 10 or SSTB 20, a request (step 142) is issued and transmitted via the upstream interactive channel to the Management System 57 using any conventional standard (i.e., ETS-300-800 or DOCSIS).

The Management System 57 registers the request (step 143) for billing, statistics, and maintenance purposes and instructs one selected SSTB to stream the requested title to the ordering subscriber, and another SSTB to serve the role of a hot backup for this streaming (step 144).

Upon receiving a viewing request, the Management system 57 locates within its database two SSTBs that store the required title (or title slice) and belong to the same cluster as the requesting subscriber's STB/SSTB. One of these SSTBs 64 is assigned a streaming role while the other 160 is assigned a monitoring and backup role. These assignments are sent to the relevant SSTB together with the channel (i.e. High-band frequency and position in the MPEG-2 stream) designated for the title to be transmitted. Both messages are transmitted in the downstream interactive channel. Both commands/messages include the following parameters:

- Title/slice ID;
- Title *broadcast time;*
- *Broadcast channel* (center frequency);
- *Broadcast program location* (within the MPEG-2 stream);
- Source SSTB *ID;* and
- Destination STB/SSTB *ID.*

Upon receiving a *streaming command* from the Management System 57, the SSTB 64 starts streaming at the instructed channel (step 147) and notifies the Management System 57 of doing so (step 155). The streaming is preferably done according to ETS-300-429 standard, by multiplexing the stored titles, and modulating the unified program stream using 64 or 256 QAM modulation in order to match the receiving capability of common digital set-top boxes. Transmission is preferably performed in the 70-860 MHz band. The acknowledgment 146 to the Management System 57 is preferably done in the low-band upstream interactive channel, preferably according to the standard which is used by the CATV operator (ETS-300-800 or DOCSIS).

Upon receiving the command, the Monitoring SSTB 160 acknowledges (step 149) the Management System 57, and tunes to the designated channel, and monitors (step 153) the integrity of the stream. In any event of failure (step 151), the Monitoring SSTB 160 notifies to the Management System 57 and starts streaming the same title/slice from the last transmitted frame and on the same used channel (step 152), thus switching its role from a monitoring/backup SSTB to an actively transmitting SSTB. A small delay is allowed since any STB 10 utilizes a receiving buffer for similar purposes. All messages from the monitoring SSTB 160 to the Management System 57 are done in the low-band upstream interactive channel according to the standard which is used by the CATV operator (e.g., ETS-300-800 or DOCSIS).

A subscriber can issue *Stop, Pause, Fast Forward* (FF), and *Rewind* commands after ordering a title.

Commands issued from Subscribers' STB/SSTB to Management System 57 are sent to the Management System 57 via upstream interactive channel according to the standard that is used by the CATV operator (e.g., ETS-300-800 or DOCSIS). The Management System 57 issues a corresponding command via the downstream interactive channel to the streaming SSTB 64 and to the monitoring SSTB 160 according to the standard that is used by the CATV operator (ETS-300-800 or DOCSIS). In one example, the streaming SSTB 64 keeps the video stream running on the same channel according to the following video stream:

- Black screen for *Stop command;*
- Last baseline frame (i.e., A frame that was not compressed in the MPEG-2 compression process and serves as a baseline for decompression algorithm) for *Pause command;*
- baseline frames in incremental order for *Fast Forward command;* and
- baseline frames in decrementing order for *Rewind command.*

Uniting transmissions from different SSTB's

In a central VOD system, as well as in a central digital video broadcast system conforming to ETS-300-429 Digital Video Broadcast or DOCSIS standard, up to 15 video streams are multiplexed according to the MPEG-2 multiplexing to/form a single 6-8 MHz channel. A number of these channels are modulated and transmitted on the coax.

By applying the PPD method and system of the invention, one to four individual video streams are transmitted from each SSTB. Using a 6-8 MHz channel, the transmission of these streams is indeed possible, but would be inefficient. Therefore, two possible solutions are detailed hereafter, allowing the usage of a 6-8 MHz channel for the simultaneous transmission of more then 4 video streams.

Virtual Multiplexing - As was previously mentioned, each SSTB 20 produces up to 4 video streams while a single 6-8 MHz channel can contain up to 15 video streams. It is possible to multiplex video streams originated from different SSTB's to a single channel. In order to explain this process, the structure of the ETS-300-429 Digital Video Broadcast 8 MHz channel, is discussed hereinafter.

The first stage in transmitting according to ETS-300-429 standard is the compression of each single video stream or program using MPEG-2 compression algorithm. The compressed programs are then multiplexed into a 188 bytes long transport stream in the following way: a header describing the programs that are carried within the transport stream precedes all program data (referred to as payload). After the header, a packet of each program appears in a pre-determined order. As long as the source programs remain the same, the order of programs within the transport stream remains also the same.

After the compression and multiplexing, the transport stream is randomized (to prevent transmission of an un-modulated carrier), Reed-Solomon Coded (using 204,188 coding), interleaved, and mapped according to the used modulation (16-64 QAM). The interleaved frames are modulated, using 16, 32, or 64 QAM modulation and transmitted on the coax cable.

It should be noted that the interleaved frame width is fixed and that a sync byte is applied before each frame, which holds a single transport stream. It is therefore possible to use each transport stream packet or frame, for a single program, and to switch the program on each consecutive frame. Any two SSTBs can utilize one channel by using consecutive frames. The first SSTB uses frames 1,3,5 ... for transmission of programs 1 to 4 and the second SSTB uses frames 2,4,6 ... for transmission of programs 5 to 8. The two SSTBs clocks must be synchronized in order to maintain a smooth streaming of the channel. This time sync is performed according to the DVB or DOCSIS standard.

Mini Relay Station - Another option to fully exploit the 6-8 MHz channel is to use one SSTB within a cluster as a relay station. That is, one selected SSTB receives all video streams from all the other SSTBs within the cluster using different frequencies then the standard. Upon receiving these transmissions, this selected SSTB multiplexes the individual streams and re-transmits them as a single in band, standard 6-8 MHz channel.

These are some of the advantages of the system of the present invention in comparison to centralized systems of the prior art:

- Optimal bandwidth usage - 10% of the bandwidth in comparison to that used by the centralized systems since the same bandwidth is reused in each cluster 30 within a node 40.
- Number of simultaneous users - essentially unlimited versus about 10-20% in the centralized systems.
- MTBF - failure proof system using redundancy and hot backup methods.
- Maintenance - Requires only the replacement of set-top boxes
- Program Recordings Capabilities - enables the recording of designated broadcast channels for later viewing on demand.
- Usage

The present invention as described has considered the usage of the inventive system for the distribution of Video on Demand (VOD). However, the system can also be used for other content distribution. Hereinafter, usage of the invention for Audio on Demand (AOD) and Internet Point of Present (POP) will be addressed.

Audio on Demand: The same implementation as described is applicable also for audio. It is possible to implement a smaller selection of titles for audio storage, or use the whole storage. For example, 100 GB of storage per SSTB and 5 SSTBs per cluster will enable the implementation of a peer-to-peer AOD system with a variety of about 20,000 songs.

Internet: Internet content is sent from the Central to one or more SSTBs in a same manner as video content is sent, as described above. The SSTB then distributes upon "demand" or access from any user within the same cluster, which can run an Internet session through channels that are dedicated to data interaction. The active session is transmitted in a same manner as the video is sent, on a dedicated channel to any STB within the cluster, allowing a subscriber to use TV Internet without special equipment besides the regular

STB. The required bandwidth is about 10% in comparison with the central Internet distribution of such sessions according to the prior art.

Protecting Media Equities

This subject of protecting the copyright of the content is of high importance.

The prior art has substantially dealt with the problem of protecting transmitted content and the solutions offered are generally applicable also in this case. However, the system of the invention introduces another aspect, i.e., the aspect of protecting of content which is stored at the users' homes. The invention solves this problem by dividing each title within a plurality of SSTBs; i.e., according to a preferred embodiment, the full title is never stored within one SSTB. Of course, as said, other known prior art protections may also be added.

While some embodiments of the invention have been described by way of illustration, it will be apparent that the invention can be carried into practice with many modifications, variations and adaptations, and with the use of numerous equivalents or alternative solutions that are within the scope of persons skilled in the art, without departing from the spirit of the invention or exceeding the scope of the claims.

**Claims**

1. A method for distributing content on demand over a cable network in which the subscribers are connected to a Central Unit in a hierarchical order of nodes, each node comprises a plurality of subscribers clusters, comprising:

a. Providing a Management System at said Central Unit;
b. Providing to some of the subscribers within each cluster an STB, and to the rest of the subscribers within each cluster an SSTB;
c. Transmitting from the Central Unit titles to the SSTBs, and storing the titles within said SSTBs;
d. Providing to each STB subscriber or SSTB subscriber a viewable list of the titles stored in all the SSTBs that are connected within the cluster of that subscriber; and
e. Whenever a subscriber selects a title for viewing from said viewable list, transmitting to the STB or the SSTB of that subscriber the selected title from at least one of the SSTBs within the cluster of that subscriber which contain the title or a portion thereof.

2. A method according to claim 1, wherein the title is a video title, and wherein the distribution method is a method for distributing Video On Demand.

3. A method according to claim 1, wherein the title is an audio title.

4. A method according to claim 1, wherein the titles are transmitted from the Central Unit to the SSTBs, during low traffic hours.

5. A method according to claim 1, wherein different portions of each title being stored within different SSTBs within a same cluster.

6. A method according to claim 1, wherein a copy of each title is stored in at least one backup SSTB within a same cluster.

7. A method according to claim 6 wherein, during the transmission of a specific title, the backup SSTB supervises the proper transmission, and when a failure in transmission of the title is detected, continuing transmission of the rest of the title to the subscriber from said backup SSTB.

8. A method according to claim 6 wherein each title being divided to portions that are stored in at least two SSTBs within a same cluster, for preventing the possibility of a copyright breach by copying a full stored title from the SSTB.

9. A method according to claim 8, wherein the title portions are transmitted in sequence to the STB or the SSTB of the ordering subscriber alternatively from the plurality of the SSTBs in which portions of the title are stored, while at any time at least one backup SSTB supervises the proper transmission.

10. A method according to claim 1, wherein the Management System collects data regarding the orders and carries out the billings.

11. A method according to claim 1 wherein the transmission of the content from the Central Unit to the SSTBs and/or the transmission of the ordered content from SSTBs to a subscriber STB or SSTB is encrypted, and decrypted at the receiving end.

12. A method according to claim 1 wherein each SSTBs is capable of carrying out Internet Sessions through the Management System over the existing Internet infrastructures, and thereby providing Internet service to subscribers within the cluster, by displaying said session as a video stream via their STB/SSTBs.

13. A method according to claim 1 wherein the number of subscribers within a cluster is in the range of several tens of subscribers.

14. A method according to claim 1 wherein a transmission of an ordered title is kept within a cluster by means of a Line Extender blocking leakage of the transmission out of the cluster.

15. A method according to claim 14 wherein the cluster is extended by modifying the blocking Line Extender in such a manner to allow transmission of the Content On Demand within a close medium containing at least two clusters, the leakage of transmission out of the said medium being blocked by another Line Extender.

16. A method according to claim 1 wherein the Management System controls the operations of the system and manages the backups, when needed.

17. A method according to claim 1 further comprising recording and storing selected programs in at least two SSTBs, and transmitting said stored program to the users, whenever a user request is obtained.

18. A method according to claim 1 wherein a SSTB is capable of concurrently transmitting a plurality of selected titles to a requesting STB/SSTB(s).

19. A method according to claim 1 wherein transmissions originated from two or more SSTBs are multiplexed to a single channel by assigning to each SSTB specific frame positions within said channel.

20. A method according to claim 1 wherein at least one SSTB in a cluster is used as a relay station for receiving transmissions from other SSTBs in said cluster, and multiplexing said transmissions on one or more channels.

21. A method according to claim 1 wherein the title transmission from the SSTBs is performed utilizing QAM techniques.
A system for providing Content On Demand over a cable network, comprising:

a. A conventional STBs at some of the subscribers' houses within each cluster, capable of receiving a title on a dedicated channel, and displaying the same on a subscriber TV;
b. SSTBs at homes of the rest of the subscribers' houses within each cluster, for receiving at low traffic hours one or more content titles, or portions of content titles, for storing the same, and for transmitting upon demand on at least one designated channel any ordered title to one or more STBs or SSTBs of ordering subscribers; and
c. A Management System for storing a plurality of titles, for transmitting titles to SSTBs within a cluster at low traffic hours, for transmitting a list of titles available for viewing to all STBs and SSTBs within each cluster, and for managing any demand for viewing from users' set top boxes, and conveying such demand to the one or more SSTBs storing the demanded title, for initiating transmission of the requested title from said one or more SSTBs to the set top box of the demanding subscriber.

22. A system according to claim 22 wherein the transmission of a title from an SSTB to an SSTB or STB within a cluster is enabled, while the transmission of a title from an SSTB to an SSTB or STB within another cluster is being blocked by means of a Line Extender located at the entrance to the cluster.

23. A system according to claim 22 wherein the Management System also manages the billing of demanded titles.

24. A system according to claim 22 wherein each SSTB comprises storage for at least one title or portions of a title.

25. A system according to claim 22 wherein each SSTB comprises communication means for conveying status commands, and execution commands to either STBs or SSTBs within its cluster, and to the Management System.

26. A system according to claim 23, wherein at least two clusters are being extended by means of modifying the Line Extenders of said clusters to enable transmission out of the said clusters.

27. A system according to claim 27 wherein the cluster extension extends the cluster to include all subscribers within a node.

28. A system according to claim 22, wherein the links within a cluster are made by means of coax cables, and splitters.

29. An SSTB according to claim 22, comprising:

a. a first and a second Video Channel Receivers for concurrently receiving titles transmitted on different channels;
b. an Interactive Channel Receiver for receiving information and control data from the Management System;
c. an Interactive Channel Transmitter for transmitting requests and status information to said Management System;
d. an information data Bus;
e. one or more memories capable of receiving and storing data provided via said information data Bus;
f. a Storage and Controller unit for managing SSTB operations;
g. an Encryption unit for encrypting information provided on said Bus;
h. a CPU unit for processing and carrying out SSTB operations;
i. a Demultiplexer for selecting multiplexed information provided on said Bus;
j. an MPEG decoder capable of decoding MPEG data provided on said Bus or via said demultiplexer;
k. a virtual multiplexer capable of multiplexing a plurality of title data provided on said Bus, to at least a single channel; and
l. a Video Channel Transmitter capable of transmitting data from said virtual multiplexer on cable Network channels.

30. A method according to claim 1, wherein a plurality or all of the subscribers within a cluster are provided with an SSTB.

31. A system according to claim 22, wherein a plurality or all of the subscribers within a cluster are provided with an SSTB.

# FIG. 1
# (Prior-art)

FIG. 2

FIG. 3
(Prior -art)

EP 1 231 790 A2

Coax RF Cable    501

502  QAM          503  QAM          504  QPSK/QAM

| Video Channel Receiver | Interactive Channel Receiver | Interactive Channel Transmitter |

**Main Bus**

| Decryption/ Smart Card | RAM/ Flash | CPU | De-MUX | MPEG2 Decoder |

510

TV→

505          506          507          508          509

# FIG. 4
# (Prior-art)

EP 1 231 790 A2

EP 1 231 790 A2

20

RF Coax Cable    501

| 611 | QAM | 615 QAM | 502 QAM | 503 QAM | QPSK/QAM | 504 |

Video Channel Transmitter

612

Virtual MUX

Video Channel Receiver 2

Video Channel Receiver 1

Interactive Channel Receiver

Interactive Channel Transmitter

**Main Bus**

| RAM | Storage & Controller | Encryption/ Smart Card | RAM/ Flash | CPU | De-M UX | MPEG2 Decoder | TV → |

614     613     505     506     507     508     509     510

# FIG. 5

FIG. 6
(Prior-art)

EP 1 231 790 A2

FIG. 7

Ferrite 1

Ferrite 2

$L_2$  $C_2$  $C_1$  $L_1$

J2  B  A  J1

$L_4$  $C_3$  $L_3$

J3

R1  $75\Omega$  C

# FIG. 8
# (Prior-art)

EP 1 231 790 A2

FIG. 9
(Prior-art)

EP 1 231 790 A2

Current Architecture
(Last Mile)

FIG. 10

**FIG. 11**

EP 1 231 790 A2

Browse EPG
and select title
141

Transmit request to management
system via upstream channel
142

140

Receipt and log of request,
select streaming SSTB
143

Extract & Display
Instructions
154

Streaming command via
downstream channel
144

57

Ack.
146

Ack.
149

64

Streaming at
instructed channel
147

Notify
155

Integrity test
153

Receive and
display
148

63

Faulty
?
Yes     No
151

Stream from
last frame on
same channel
152

160

FIG. 12